# FASCICULE DE BREVET EUROPEEN

(11) **EP 0 505 262 B1**
(45) Date de publication et mention de la délivrance du brevet: **18.11.1993**
(21) Numéro de dépôt: 92400705.7
(22) Date de dépôt: 17.03.1992
(51) Int. Cl.: B29C 47/06, B43K 19/16

(54) **Procédé de fabrication par tri-extrusion d'un crayon à écrire ou à colorier et crayon à écrire ou à colorier comportant une gaine intermédiaire de protection de la gaîne**
Verfahren zum Herstellen eines Schreib- oder Farbstiftes durch Tri-Extrusion und danach hergestellter Schreib- oder Farbstift mit einer Schutzschicht für die Mine
Method of manufacturing a crayon or pencil by triple extrusion, crayon or pencil featuring an intermediate protective jacket for the lead

(30) Priorité: 19.03.1991 FR 9103464
(43) Date de publication de la demande: 23.09.1992
(73) Titulaire: CONTE S.A., 62205 Boulogne sur Mer Cédex (FR)
(72) Inventeur: Bachelet, Jacques, F-62240 Cremarest (FR); Chavatte, Philippe, F-62930 Wimereux (FR); Chochoy, Guy, F-62360 Saint Leonard (FR); Duez, José, F-62200 Boulogne sur Mer (FR); Fouble, Claude, F-62200 Ostrohove (FR); Lange, Didier, F-62360 Saint Leonard (FR)
(74) Mandataire: Hénnion, Jean-Claude

(56) Documents cités:
- AU-B- 494 026
- FR-A- 989 587
- FR-A- 1 588 294
- FR-A- 2 099 248
- US-A- 2 790 202
- US-A- 2 879 544
- US-A- 3 625 788
- US-A- 3 949 042

## Description

La présente invention concerne un procédé pour la fabrication en continu d'un crayon à écrire ou à colorier, par extrusion simultanée de matières thermoplastiques constituant successivement d'une part la mine et d'autre part la matière qui entoure la mine, dénommée matière bois dans la suite du présent texte par analogie avec la composition des crayons traditionnels, dans lesquels cette matière est en bois. Elle concerne également un crayon à écrire ou à colorier, susceptible d'être obtenu par le procédé de l'invention.

La fabrication des crayons traditionnels est réalisée en déposant une mine de graphite ou une mine pigmentée dans une gaine de bois. La sélection limitée des bois possibles , les traitements qu'il est nécessaire de leur faire subir , la complexité des etapes du procédé de fabrication et de finition constituent des inconvénients majeurs. De plus les arbres dont provient le bois sont une composante importante de l'équilibre naturel et leur élimination excessive ne peut que perturber cet équilibre.

On a déjà proposé de simplifier la technique de fabrication des crayons à écrire en remplaçant le bois proprement dit par une matière thermoplastique choisie de telle sorte qu'elle ait des propriétés de taillabilité comparables au bois.

Dans le document US. 2 790 202 ladite matière bois est extrudée autour d'une mine préformée rigide, éventuellement revêtue d'un adhésif, afin d'améliorer l'adhésion entre la mine et la matière bois.

Dans ce même document US. 2 790 202, selon une autre variante de réalisation, la mine est obtenue par extrusion d'une matière thermoplastique chargée et la matière bois est coextrudée autour de la mine.

Dans le document FR.1.588.294, on a proposé de réaliser la mine à partir d'une matière thermoplastique chargée par exemple en graphite , puis de l'envelopper avec une matière bois comportant un agent d'expansion, c'est-à-dire une substance dont la décomposition s'effectue dans la gamme des températures auxquelles est réalisée l'extrusion de la matière bois.

Le premier rôle de l'agent d'expansion est de diminuer la densité de la matière bois, le but étant de se rapprocher le plus possible de la densité du bois proprement dit, qui est de l'ordre de 0,5. De plus cette utilisation d'agent d'expansion améliore la taillabilité de la matière bois et en réduit le coût.

Le document FR.2.099.248 décrit un procédé, applicable notamment pour la fabrication en continu de crayons à écrire, dans lequel l'enveloppement de la matière bois se fait à la sortie immédiate de l'orifice de sortie de la filière d'extrusion de la matière mine. Il s'agit d'une bi-extrusion.

On comprend qu'un tel type de procédé présente de très grands avantages par rapport à la fabrication des crayons traditionnels: fabrication en continu , meilleure maîtrise des matières premières , productivité élevée.

Cependant le demandeur a constaté que la fabrication de crayons à écrire en mettant en oeuvre une bi-extrusion avec des matières thermoplastiques du type de celles préconisées par le document FR.1.588.294 comportait une limitation importante.

En effet il a été remarqué des défauts lors de la production de certains types de crayons, ces défauts consistant dans la présence de bulles sur la périphérie extérieure de la matière mine. De tels défauts sont rédhibitoires car ils diminuent la solidité de la mine et d'autre part ils nuisent à l'esthétique du crayon taillé.

Le but que s'est fixé le demandeur est de proposer un procédé de fabrication en continu de crayons à écrire ou à colorier du type de celui divulgué par le document FR.1.588.294, et mettant en oeuvre la poly-extrusion mais qui ne présente pas l'inconvénient précité.

Ce but est parfaitement atteint par le procédé de l'invention. Il s'agit d'un procédé de fabrication en continu de crayons à écrire ou à colorier, qui consiste à extruder une première matière thermoplastique chargée, dénommée matière mine, puis à envelopper ladite matière mine par une couche d'une seconde matière thermoplastique extrudée contenant un agent d'expansion, dénommé matière bois. De manière caractéristique, la matière mine extrudée est, préalablement à son enveloppement par la matière bois, enveloppée par une couche intermédiaire dite de protection, réalisée par extrusion d'une matière thermoplastique exempte d'agent d'expansion, compatible avec la matière mine et la matière bois et ayant une température de fusion qui est égale ou supérieure à la fois à la température de fusion de la matière mine et à celle de la matière bois.

Ainsi la couche de protection recouvre la matière mine immédiatement après l'extrusion de celle-ci et forme une barrière de protection contre la pollution due à l'agent d'expansion contenu dans la matière bois. En effet à partir des constatations faites par le demandeur, il ressortirait que l'apparition des défauts pourrait provenir des bulles de gaz qui se dégagent lors de l'extrusion de la matière bois en contact avec la matière mine. En conséquence la présence de cette couche de protection, qui ne contient pas d'agents d'expansion , empêche la formation directe des bulles de gaz en périphérie de la matière mine.

La compatibilité de la matière thermoplastique constitutive de la couche de protection avec les matières mine et bois est indispensable pour obtenir une bonne tenue de la mine dans le crayon.

Le procédé de l'invention est particulièrement intéressant lorsqu'il s'agit de fabriquer des crayons à mine tendre dont la matière mine a une température de fusion sensiblement inférieure à celle de la matière bois. En effet il s'avère que les défauts de bullage sont les plus fréquents pour ce type de crayons , contrairement aux crayons à mine dure pour lesquels ces défauts sont peu nombreux voire inexistants.

Selon le demandeur , on pourrait expliquer ce phénomène par le fait que les composants mis en oeuvre dans la matière mine pour que la mine soit dure , selon la classification habituelle dans le domaine des crayons à écrire ou à colorier, ont globalement une température de fusion qui est sensiblement égale à la température de la matière bois. Par contre s'agissant d'une mine douce, la matière mine a une température de fusion nettement inférieure à la température de la matière bois, cette différence pouvant aller jusqu'à plusieurs dizaines de degré. Etant donné que la température de la tête de bi-extrusion est à une température proche de la température la plus élevée, la matière mine est plus fluide lorsqu'elle sort de la filière d'extrusion et est donc facilement déformable sous l'effet des bulles dégagées en surface de la matière bois.

Dans la mise en oeuvre du procédé de l'invention, la matière thermoplastique constitutive de la couche de protection est - du fait de sa température de fusion - moins fluide que les matières mines et bois; elle n'est donc pas déformable sous l'effet des bulles dégagées en surface de la matière bois et constitue bien une barrière de protection pour la matière mine.

C'est un autre objet de l'invention que de revendiquer un crayon à écrire ou à colorier, qui est susceptible d'être obtenu par le procédé de fabrication précité.

De manière connue , ce crayon est constitué par la superposition d'une âme en une première matière thermoplastique chargée dénommée matière mine et d'une couche d'une deuxième matière thermoplastique expansée dénommée matière bois.

De manière caractéristique , le crayon selon l'invention comporte une couche intermédiaire dite de protection entre la matière mine et la matière bois , dans une matière thermoplastique non expansée, adhérant à la matière mine et à la matière bois et ayant une température de fusion qui et égale ou supérieure à la fois à la température de fusion de la matière mine et à celle de la matière bois.

Selon une première variante de réalisation , la couche de protection est dans la deuxième matière thermoplastique, constitutive de la matière bois , mais sans que celle-ci soit expansée.

Avantageusement , la couche de protection se présente sous la forme d'une gaine de quelques dixièmes de millimètres d'épaisseur. Ainsi la présence de cette gaine , qui n'est pas expansée , n'augmente pas sensiblement la densité du crayon. De plus on a constaté que la taillabilité du crayon diminuait pour une couche de protection plus épaisse.

De préférence , la matière mine , la matière bois et la matière thermoplastique constitutive de la couche de protection contiennent toutes trois le même composant de base par exemple un copolymère polystyrène-méthacrylate. Ceci permet une très bonne compatibilité et donc une adhérence parfaite.

De préférence , dans ce cas , la couche de protection est réalisée à partir dudit composant à l'état pur ou d'un mélange comportant au moins 90% dudit composant.

La couche de protection peut être de la couleur de la matière bois ou éventuellement d'une autre couleur, ce qui constitue un avantage au niveau décoratif.

Les caractéristiques et avantages de l'invention seront mieux compris à la lecture de la description qui va être faite d'une version du procédé de fabrication d'un crayon à écrire ou à colorier par tri-extrusion de matières thermoplastiques et du crayon à trois couches successives ainsi obtenu, illustré par le dessin annexé dans lequel :
La figure 1 est une représentation sous forme d'un diagramme des étapes de la tri-extrusion,
La figure 2 est une vue en perspective du crayon à couche de protection selon l'invention.

Les techniques de poly-extrusion sont bien connues de l'homme du métier. Les matériels mis en oeuvre sont par exemple du type de celui décrit dans le document FR.2.099.248 pour la bi-extrusion, appliqué à la fabrication en continu de crayons à écrire.

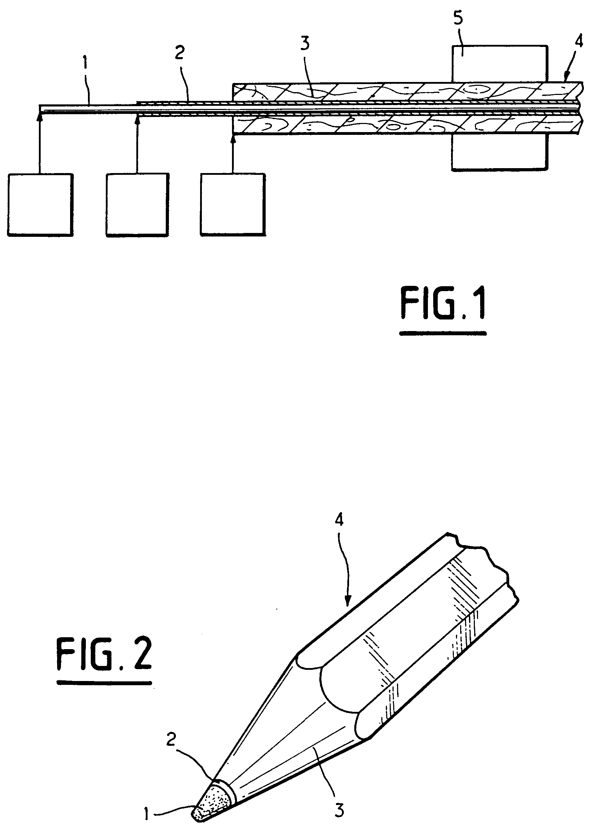

De ce fait , on s'est contenté de schématiser sur la figure 1 une tri-extrusion de trois couches de matières thermoplastiques respectivement une âme centrale, une couche intermédiaire et une couche extérieure.

Dans le cadre de la présente invention l'âme centrale constitue la matière mine 1, la couche intermédiaire constitue la couche de protection 2 et la couche extérieure constitue la matière bois 3 d'un crayon 4 fabriqué en continu.

La composition des matières thermoplastiques est déterminée pour que chaque élément correspondant ait les propriétés que l'on en attend : l'ensemble du crayon doit avoir une bonne taillabilité, et une densité proche de celle du crayon traditionnel en bois, la matière mine doit comporter des charges pour l'écriture et être facilement transférable sur le support d'écriture ou de coloriage pour avoir un bon pouvoir couvrant. Les composants correspondants sont par exemple choisis parmi ceux décrits dans le document FR.1.588.294.

De plus , la matière bois 3 contient un agent expansant par exemple de l'azodicarbonamide , et la couche de protection 2 qui est exempte d'agent expansant doit être compatible avec d'une part la matière mine 1 et la matière bois 2 en sorte d'assurer la bonne tenue de la mine dans le crayon, et doit avoir une température de fusion qui est égale ou supérieure à la fois à la température de fusion de la matière mine et à celle de la matière bois.

De préférence les matières thermoplastiques constitutives de ces trois éléments 1,2,3 ont comme base un même constituant. Dans les exemples décrits ci-après il s'agit d'un copolymère polystyrène méthacrylate.

### Exemple 1 :

Il s'agit d'un crayon 4 à mine douce en graphite.
La composition de la matière mine 1 est la suivante :
. copolymère polystyrène-méthacrylate 30%
. plastifiant du type phtalate 10%
. graphite 50%
. noir de carbone 5%
. stéarate de zinc 0,5%
. talc 4,5%

La composition de la couche de protection 2 est la suivante :
. copolymère polystyrène-méthacrylate 100%
La composition de la matière bois 3 est la suivante :
. copolymère polystyrène-méthacrylate 78,5%
. plastifiant du type phtalate 10%
. sciures de bois 10%
. pigments (mélange maître) 1,5%

Juste avant extrusion on mélange à la matière bois de l'ordre de 2% d'un mélange maître contenant de l'azodicarbonamide comme agent expansant.

La température de fusion de la matière bois est de l'ordre de 200°C, celle de la couche de protection 2 de 210°C et celle de la matière mine de l'ordre de 180°C.

Après tri-extrusion et passage en continu dans un conformateur 5, on obtient un crayon 4 de configuration hexagonale qui, une fois taillé (figure 2) , laisse apparaître entre la matière mine 1 et la matière bois 3 la gaine de protection 2 , qui dans le cas d'espèce avait une épaisseur de 0,3mm pour un crayon 4 d'environ 7mm entre plats et une mine 1 d'environ 2mm de diamètre.

Dans le présent exemple, il s'agit d'une mine douce , et elle ne comporte aucune bulle en surface qui vienne nuire à sa résistance et à son esthétique.

Pour l'obtention d'un crayon à mine dure, on aurait dû par exemple supprimer dans la composition de la matière mine 1 le plastifiant de type phtalate et on l'aurait remplacé par du copolymère polystyrène-méthacrylate. Dans ce cas la température de fusion de la matière mine aurait été de l'ordre de 210°C, et les défauts de bullage auraient été peu nombreux voire inexistants.

### Exemple 2 :

Il s 'agit d'un crayon 4 à mine douce de couleur.
La matière bois 3 et la couche de protection 2 sont inchangées.
La composition de la matière mine 1 est la suivante :
. copolymère polystyrène-méthacrylate 30%
. plastifiant du type phtalate 15%
. pigments colorés 20%
. stéarate de zinc 0,5%
. talc 35%

Sa température de fusion est de l'ordre de 180°C.

En plus des avantages déjà explicités, il est apparu au demandeur que grâce à la gaine de protection, tous les types de crayons à écrire ou à colorier pouvaient être réalisés, y compris les crayons à mine extra-tendre. Dans ce cas , la gaine de protection, qui a dans ce cas de préférence une épaisseur au moins égale à 0,5mm, fait office de renfort pour la matière mine et cette consolidation diminue très sensiblement les risques de casse de la mise à l'usage.

L'invention n'est pas limitée au mode de réalisation qui a été décrit à titre d'exemple non exhaustif , mais en couvre toutes les variantes. La couche de protection selon l'invention peut être apparente comme c'est le cas sur la figure 2 ; on peut aussi la colorer de sorte qu'elle ne soit pas visible. Dans l'exemple précité on a utilisé un composant à l'état pur , mais il peut s'agir d'un mélange , tel celui constitutif de la matière bois sans agent expansant. On peut aussi choisir d'autres composants de base que le copolymère polystyrène-méthacrylate.

La conformation peut donner au crayon tous types de configuration, sans limitation à la forme hexagonale; il peut s'agir d'une forme circulaire, triangulaire, octogonale, sans que cette liste soit exhaustive.

## Revendications

1. Procédé de fabrication en continu d'un crayon à écrire ou à colorier (4), consistant à extruder une première matière thermoplastique chargée, dénommée matière mine (1), puis à envelopper ladite matière mine par une couche d'une seconde matière thermoplastique extrudée contenant un agent d'expansion, dénommée matière bois (3), caractérisé en ce que , la matière mine (1) extrudée est , préalablement à son enveloppement par la matière bois (3), enveloppée par une couche intermédiaire dite de protection (2), réalisée par extrusion d'une matière thermoplastique exempte d'agent d'expansion, compatible avec la matière mine (1) et la matière bois (3), et ayant une température de fusion qui est égale ou supérieure à la fois à la température de fusion de la matière mine et à celle de la matière bois.

2. Procédé selon la revendication 1 caractérisé en ce qu'il est utilisé pour la fabrication des crayons à mine tendre, dont la matière mine a une température de fusion sensiblement inférieure à celle de la matière bois.

3. Crayon à écrire ou à colorier, constitué par la superposition d'une âme en une première matière thermoplastique chargée dénommée matière mine (1) et d'une couche d'une deuxième matière thermoplastique expansée dénommée matière bois (3), caractérisé en ce qu'il comporte une couche intermédiaire dite de protection (2) entre la matière mine (1) et la matière bois (3) , dans une matière thermoplastique non expansée, compatible avec la matière mine (1) et la matière bois (3) et ayant une température de fusion qui est égale ou supérieure à la fois à la température de fusion de la matière mine et à celle de la matière bois.

4. Crayon selon la revendication 3 caractérisé en ce que la couche de protection (2) est dans la deuxième matière thermoplastique, constitutive de la matière bois (3), mais sans que celle-ci soit expansée.

5. Crayon selon la revendication 3 caractérisé en ce que la couche de protection (2) se présente sous la forme d'une gaine de quelques dixièmes de millimètres d'épaisseur.

6. Crayon selon la revendication 3 caractérisé en ce que la matière mine (1), la matière bois (3) et la matière thermoplastique constitutive de la couche de protection (2) contiennent toutes trois le même composant de base.

7. Crayon selon la revendication 6 caractérisé en ce que le composant de base est un copolymère polystyrène-méthacrylate.

8. Crayon selon une des revendications 6 ou 7 caractérisé en ce que la couche de protection (2) est réalisée à partir dudit composant à l'état pur ou d'un mélange comportant au moins 90% dudit composant.

9. Crayon selon la revendication 3 caractérisé en ce que la couche de protection (2) est d'une couleur différente de celle de la matière bois (3).

10. Crayon selon la revendication 3 caractérisé en ce que la matière mine (1) étant en qualité extra-douce, la couche de protection (2) a une épaisseur d'au moins cinq dixièmes de millimètre.

## Patentansprüche

1. Fortlaufendes Herstellungsverfahren für einen Bleistift oder Buntstift (4), das darin besteht, ein erstes gesättigtes, Minenmaterial (1) genanntes Thermoplastmaterial zu extrudieren, dann das besagte Material mit einer Schicht eines zweiten extrudierten Thermoplastmaterials zu umhüllen, das ein Expansionsmittel, genannt Holzmaterial (3), enthält, dadurch gekennzeichnet, daß das extrudierte Minenmaterial (1) vor seiner Umhüllung mit dem Holzmaterial (3) mit einer Schutzschicht (2) genannten Zwischenschicht umhüllt wird, die durch Extrusion eines von Expansionsmittel freien Thermoplastmaterials hergestellt wird, das sich mit dem Minenmaterial (1) und dem Holzmaterial (3) verträgt und eine Schmelztemperatur hat, die entweder sowohl gleich der Schmelztemperatur des Minenmaterials als auch des Holzmaterials oder höher ist.

2. Verfahren nach Anspruch 1, dadurch gekennzeichnet, daß es für die Herstellung von weichen Bleistiften eingesetzt wird, deren Minenmaterial eine Schmelztemperatur aufweist, die weitgehend unter der des Holzmaterials liegt.

3. Blei- oder Buntstift, gebildet durch das Übereinanderlagern eines Kerns aus einem angereicherten ersten, Minenmaterial (1) genannten Thermoplastmaterial und einer Schicht eines zweiten, expandierten, Holzmaterial (3) genannten Thermoplastmaterials, dadurch gekennzeichnet, daß er eine Schutzschicht genannte Zwischenschicht (2) zwischen dem Minenmaterial (1) und dem Holzmaterial (3) aus einem nicht expandierten Thermoplastmaterial aufweist, das sich mit dem Minenmaterial (1) und dem Holzmaterial (3) verträgt und eine Schmelztemperatur aufweist, die gleich der Schmelztemperatur sowohl des Minenmaterials als auch des Holzmaterials oder höher ist.

4. Stift nach Anspruch 3, dadurch gekennzeichnet, daß die Schutzschicht (2) aus dem zweiten Thermoplastmaterial besteht, aus dem das Holzmaterial (3) besteht, aber ohne daß diese expandiert wäre.

5. Stift nach Anspruch 3, dadurch gekennzeichnet, daß die Schutzschicht (2) eine Hülle von einigen Zehntelmillimetern Dicke bildet.

6. Stift nach Anspruch 3, dadurch gekennzeichnet, daß das Minenmaterial (1), das Holzmaterial (3) und das Thermoplastmaterial, aus dem die Schutzschicht (2) besteht, alle drei den gleichen Grundbestandteil aufweisen.

7. Stift nach Anspruch 6, dadurch gekennzeichnet, daß der Grundbestandteil ein Copolymer aus Polystyrol und Methacrylat ist.

8. Stift nach einem der Ansprüche 6 oder 7, dadurch gekennzeichnet, daß die Schutzschicht (2) auf der Basis dieses Bestandteils in reinem Zustand oder einer mindestens 90 % dieses Bestandteils enthaltenden Mischung hergestellt wird.

9. Stift nach Anspruch 3, dadurch gekennzeichnet, daß die Schutzschicht (2) eine andere Farbe hat als das Holzmaterial (3).

10. Stift nach Anspruch 3, dadurch gekennzeichnet, daß, wenn das Minenmaterial (1) von besonders weicher Qualität ist, die Schutzschicht (2) eine Stärke von mindestens fünf Zehntelmillimetern hat.

## Claims

1. Method for continuously manufacturing a writing or coloring pencil (4), consisting in extruding a first thermoplastic material, containing a filler and called lead material (1), and covering said lead material with a layer of a second extruded thermoplastic material containing an expanding agent, called wood material (3), characterized in that the extruded lead material (1) is, prior to receiving its casing of wood material (3), enveloped in an intermediate layer, called protective layer (2), produced by extruding a thermoplastic material which contains no expanding agent, and is compatible with the lead material (1) and the wood material (3) and having a melting point which is equal to or higher than both the melting points of the lead material and of the wood material.

2. Method according to claim 1, characterized in that it is used for manufacturing soft lead pencils, of which the lead material has a melting point substantially lower than that of the wood material.

3. Writing or coloring pencil, constituted by the superposition of a core in a first thermoplastic material containing a filler and called lead material (1) and of a layer of a second expanded thermoplastic material which is called wood material (3), characterized in that it includes an intermediate layer, called protective layer (2), between the lead material (1) and the wood material (3), which intermediate layer is in non-expanded thermoplastic material, compatible with the lead material (1) and the wood material (3) and having a melting point which is equal to or higher than both the melting points of the lead material and of the wood material.

4. Pencil according to claim 3, characterized in that the protective layer (2) is made from the second thermoplastic material, constituting the wood material (3), but without it being expanded.

5. Pencil according to claim 3, characterized in that the protective layer (2) is in the form of a casing of several tenths of millimeter thickness.

6. Pencil according to claim 3, characterized in that the lead material (1), the wood material (3) and the thermoplastic material constituting the protective layer (2) all three contain the same basic component.

7. Pencil according to claim 6, characterized in that the basic component is a polystyrene-methacrylate copolymer.

8. Pencil according to one of claims 6 or 7, characterized in that the protective layer (2) is produced from said component in pure state or from a mixture containing at least 90% of said component.

9. Pencil according to claim 3, characterized in that the protective layer (2) is of a different color from the wood material (3).

10. Pencil according to claim 3, characterized in that the lead material (1) being of extra-soft quality, the protective layer (2) has a thickness of at least five tenths of a millimeter.
